# EUROPÄISCHE PATENTSCHRIFT

(11) **EP 1 792 077 B1**
(45) Veröffentlichungstag und Bekanntmachung des Hinweises auf die Patenterteilung: **25.06.2014**
(21) Anmeldenummer: 05763640.9
(22) Anmeldetag: 06.07.2005
(51) Int. Cl.: G01H 1/00, F03D 11/00

(54) **VERFAHREN UND VORRICHTUNG ZUR ÜBERWACHUNG DES ZUSTANDES VON ROTORBLÄTTERN AN WINDKRAFTANLAGEN**
METHOD AND DEVICE FOR MONITORING THE STATE OF ROTOR BLADES ON WIND POWER INSTALLATIONS
PROCEDE ET DISPOSITIF POUR SURVEILLER L'ETAT D'AILETTES DE ROTORS DANS DES INSTALLATIONS EOLIENNES

(30) Priorität: 28.07.2004 DE 102004036677; 12.04.2005 DE 102005017054
(43) Veröffentlichungstag der Anmeldung: 06.06.2007
(73) Patentinhaber: Bosch Rexroth AG, 97816 Lohr am Main (DE)
(72) Erfinder: VOLKMER, Peter, 01109 Dresden (DE)
(74) Vertreter: Lippert, Stachow & Partner
(86) Internationale Anmeldenummer: PCT/DE2005/001187
(87) Internationale Veröffentlichungsnummer: WO 2006/012827

(56) Entgegenhaltungen:
- EP-A- 1 359 321
- WO-A-02/053910
- DE-A1- 10 160 360
- US-A- 5 140 856
- US-A- 5 471 880

## Beschreibung

Die Erfindung betrifft ein Verfahren und eine Vorrichtung zur Überwachung des Zustandes von Rotorblättern an Windkraftanlagen, wobei mittels eines oder mehrerer an zumindest einem Rotorblatt angeordneter Bewegungssensoren Körperschall zumindest eines Rotorblattes gemessen wird, deren Ausgangssignale drahtlos an eine Auswerteeinheit übertragen werden, welche eine zentrale Rechnereinheit und Speichereinheiten umfasst und wo aus den Signalen mittels geeigneter Methoden ein Frequenzspektrum ermittelt, das Frequenzspektrum mit in der Auswerteeinheit hinterlegten, definierten Schadens- und Sonderzuständen entsprechenden und parametrisierten Referenzspektren verglichen und daraus der Zustand des Rotorblattes ermittelt wird.

Rotorblätter gehören mit zu den am höchsten belasteten Komponenten einer Windkraftanlage. Sie sollen den enormen Fliehkräften, Windströmungen, Turbulenzen, Sonnenstrahlung, unterschiedlichsten Temperaturen sowie Eisansatz über mehrere Jahre im Dauerbetrieb standhalten, um einen wirtschaftlichen Betrieb der Windkraftanlage zu ermöglichen. Aus diesem Grund ist die frühzeitige Erkennung von Schäden sowohl in der aerodynamischen Schale des Rotorblattes als auch an seinen tragenden Bauteilen im Inneren des Rotorblatts erforderlich. Denn eine Reihe von Schäden, insbesondere Rissen in der Schale, Schichtablösungen, Gurt- und Stegablösungen sowie Abplatzungen, können auf diese Weise behoben werden, bevor größere oder gar Totalschäden an der gesamten Anlage entstehen.

Aus der Überwachung von Gasturbinen ist z.B. ein Verfahren bekannt (US 5 471 880 A), bei dem akustische Signale der einzelnen Blätter der Turbine mittels eines stationären Sensors aufgenommen werden, an welchem sich jedes Turbinenblatt im Verlaufe einer Rotation vorbeibewegt. Anhand der so zu ermittelnden, für die einzelnen Turbinenblätter charakteristischen Dopplersignalen, die durch Mittelwertbildung vom Umgebungsrauschen separiert werden, können die einzelnen Turbinenblätter detektiert und identifiziert werden.

Verschiedene Überwachungssysteme von Rotorblättern von Windkraftanlagen nutzen eine Vorrichtung zum Erfassen von Belastungen der Rotorblätter indem Sensoren oder Dehnungsmesser in verschiedenen, stark belasteten Stellen der Windkraftanlage vorgesehen sind, um schädigende Vibrationen oder Dehnungen infolge zu großer oder ungleichmäßiger Kräfte festzustellen. So wird beispielsweise in der Schrift WO 99/57435 eine Windkraftanlage beschrieben, an deren Rotorblättern je ein Triaxialbeschleunigungsmesser vorgesehen sind, welche solche Beschleunigungen der aerodynamischen Schalen der Rotorblätter anzeigen, welche von Blatt- und Kantenvibrationen herrühren. Mittels einer Rechnereinheit können aus den Sensorsignalen auch Eigenfrequenzen der Rotorblätter abgeschätzt werden.

Jedoch werden auch in dieser Vorrichtung lediglich überhöhte Beschleunigungsbelastungen im Verlauf der Drehbewegung oder bei Turbulenzen sowie die Auswirkungen größerer Schädigungen auf das Rotorblatt als Ganzes oder abrupte, größere Änderungen der Eigenfrequenzen festgestellt, ohne eine Bestimmung der Art des Schadens oder eine Lokalisierung vornehmen zu können. Dies ist jedoch erforderlich, um eine vorbeugende und vor allem auch vorausschauende Instandsetzung, beispielsweise in windschwachen Zeiten, zu ermöglichen, um eine höhere Verfügbarkeit und somit eine höhere Effektivität der Windkraftanlagen zu erzielen.

Die fehlende Bestimmung der Schadensart ist jedoch besonders für nicht sichtbare Schädigungen und Langzeitveränderungen wie z. B. Versprödungen des Rotorblattes nachteilig, da eine erforderliche Instandsetzung nicht möglich oder gar nicht erkannt wird.

Eine Bestimmung der Schadensart wird in der Überwachung von Rotorblättern gemäß der Offenlegungsschrift DE 100 65 314 A1 beschrieben. Dort werden aus der Bestimmung von Resonanz- und Eigenfrequenzen, welche in Rotorblättern mittels Schwingungserregung erzeugt werden, und deren Vergleich mit vorgehaltenen, definierte Schadenszustände charakterisierenden Referenzspektren Schädigungen der einzelnen Rotorblätter ermittelt. Jedoch hat sich gezeigt, dass die Mikroschwingungen des Körperschalls derart von zufälligen Ereignissen und Störungen überlagert wurden, dass trotz der expliziten Schwingungserregung nur erhebliche Schädigungen festzustellen waren. Auch eine Korrektur der Eigenfrequenzen von den Störungen durch die Messung des durch die Störungen hervorgerufenen Körperschalls, wie es in der Schrift WO 02/053910 A1 beschrieben ist, führte nicht zu einer reproduzierbaren Ermittlung und Bewertung von im Entstehen begriffenen und somit noch zu behebenden Schädigungen der Rotorblätter.

Somit liegt der Erfindung die Aufgabenstellung zugrunde, ein Verfahren und eine Vorrichtung zur laufenden und Einzelüberwachung von Rotorblättern an windkraftanlage darzustellen, mit denen entstehende örtliche innere und äußere Schädigungen und ebenso Schädigungen verursachende Sonderzustände der Rotorblätter frühzeitig zu erkennen und zu bewerten, um vorzugsweise automatisiert Einfluss auf den Betrieb der Anlage nehmen zu können.

Die Aufgabe wird durch ein Verfahren gelöst, welches die Merkmale gemäß Anspruch 1 und durch eine für das Verfahren geeignete Vorrichtung, welche die Merkmale gemäß Anspruch 19 aufweist.

Das erfindungsgemäße Verfahren beruht grundlegend auf der Bestimmung der Eigenschwingungen und der zugehörigen Oberwellen des räumlich ausgedehnten Körpers eines Rotorblattes, welche diesen Körper entsprechend seiner konkreten Ausformung und spezifischer mechanischer Eigenschaften charakterisieren. Diese Eigenschwingungen ergeben für jeden Körper ein ganz typisches Spektrum. Verändert sich der Körper durch innere und/oder äußere Schäden oder Veränderungen, wie Schichtablösungen oder Risse, so verändert sich das Spektrum in der Weise, dass bestimmte Schwingungsformen nicht mehr oder in veränderter Form auftreten. Ebenso ändert sich das Spektrum, wenn sich die Materialeigenschaften, beispielsweise der Elastizitätsmodul oder die Dichte, infolge von Extrembelastungen, Alterung oder Verwitterung ändern. Hierbei kommt es insbesondere zu einer Verschiebung der typischen Frequenzen.

Der Zustand eines Rotorblattes wird durch die Messung einer Reihe von Einzelmessungen bestimmt, welche zu einer Messperiode zusammengefasst werden. Die Einzelmessungen können sowohl durch nacheinander folgende Messungen nur eines Sensors, mittels mehrerer, synchroner Sensoren oder auch einer Kombination beider varianten erfolgen. Aus den durch die Einzelmessungen gewonnenen Signalen werden Einzelspektren ermittelt und diese unter Verwendung geeigneter Normierungs- und Wichtungsverfahren akkumuliert. Die Akkumulation erfordert wiederum, dass jede Einzelmessung hinsichtlich ihres Messstarts auf einen zwar beliebigen, aber für die Messperiode festen Drehwinkel des Rotors getriggert wird.

Die Akkumulation synchron ermittelter Einzelspektren führt zu einem Zustandsspektrum mit größerem Signal-Rausch-Abstand und somit zur Möglichkeit der Zustandsbestimmung des Rotorblattes aus dem Zustandsspektrum mit der erforderlichen Reproduzierbarkeit. Die Anzahl der Einzelmessung für eine Zustandsmessung hängt von verschiedensten Faktoren ab, welche den Signal-Rausch-Abstand bestimmen. Diese können messtechnischer Art sein, aber auch von den zur Verfügung stehenden Referenzspektren oder dem bisher bekannten zustand des Rotorblattes abhängen.

Die erforderliche Schwingungsanregung erfolgt bei Messungen im laufenden Betrieb (Online-Messungen) in der Regel durch den Betrieb an sich und den dabei auf das Rotorblatt angreifenden Wind.

Mit dem Sensor wird erfindungsgemäß der Körperschall jener Bauteile gemessen, an welchen der Sensor befestigt ist. Es können unabhängig davon jedoch auch Bewegungen und Beschleunigungen des Rotorblattes als Ganzes gemessen werden, wobei in letzterem Fall lediglich die Überschreitung vorher definierter Grenzwerte beobachtet werden kann. Die Schwingungsmessungen der einzelnen Rotorblätter gestattet auch gleichzeitig die bekannte Resonanz- sowie Turbulenzüberwachung, indem das Wachstum der Amplituden bestimmter Frequenzen überwacht wird und bei Überschreitung eines Schwellwertes auf einen Sonderzustand geschlossen wird. Vorzugsweise werden dafür die Amplituden der Schwung- und Schlagfrequenzen der Rotorblätter überwacht. Die Messungen zur Überwachung der Rotorblätter erfolgen kontinuierlich oder auch als periodisch wiederkehrende Einzelmessungen an der in Betrieb befindlichen windkraftanlage. Sie können jedoch ebenso an ruhenden Rotorblättern (Offline-Messungen) durchgeführt werden.

Vorteilhaft erweist es sich auch, wenn die Körperschallmessung eines Rotorblattes mehrdimensional mit mehreren Sensoren erfolgt, welche vorzugsweise unterschiedlich ausgerichtet und synchronisiert sind. Diese Ausgestaltung gestattet es, die verschiedenen Schwingungsrichtungen eines definierten Schwingungszustandes zu betrachten und somit die Zustandsbestimmung zu verfeinern. Dabei erfordert die Messung mit mehreren Sensoren an einem Rotorblatt jedoch nur die beschriebene Synchronisation hinsichtlich des Drehwinkels des Rotorblattes, wenn die Messungen nicht gleichzeitig, sondern zeitlich versetzt erfolgen sollen oder können. Bei mehreren und/oder mehrdimensionalen Sensoren je Rotorblatt werden mehrere ein- bis mehrdimensionale Spektren ermittelt, wobei in diesem Fall die Ermittlung der Einzelspektren, beispielsweise durch Fouriertransformation, in speziellen Koordinaten- und Bezugssystemen ausgeführt wird, welche die optimale Beschreibung und die Verknüpfung der verschiedenen mehrdimensionalen Schwingungszustände gestatten. So sieht eine vorteilhafte Ausgestaltung des Verfahrens vor, dass die Schwingungscharakterisierung in einem geeigneten Koordinatensystem, vorzugsweise einem Kugelkoordinatensystem erfolgt.

Die Triggerung der Einzelmessungen einer Messperiode auf einen einheitlichen Drehwinkel kann erfindungsgemäß sowohl hardwareals auch softwareseitig geschehen. Die hardwaremäßige Triggerung erfolgt vorzugsweise mittels eines weiteren Sensors, der aktuelle Drehwinkelinformationen an eine, die Messung regelnde Sensor-Versorgungs- und Messwert-Vorverarbeitungseinheit übergibt, so dass der Start aller Einzelmessungen zeitlich unmittelbar an die Drehbewegung des Rotors geknüpft ist.

Die softwareseitige Triggerung hingegen verwendet lediglich einen Ausschnitt aus einem größeren, frei wählbaren Messbereich, der zumindest jene Anzahl von Rotationen umfasst, die der Anzahl der gewählten Einzelmessungen entspricht. Die eigentliche Triggerung jeder Einzelmessung einer Messperiode auf einen einheitlichen Drehwinkel erfolgt somit in der Auswerteeinheit, indem jede Einzelmessung durch periodizitätsbezogene Startkriterien aus den größeren Messbereichen einer oder mehrerer Messungen selektiert wird. Es ist jedoch auch möglich, dass die Synchronisierung durch andere geeignete hard- oder softwaremäßige Maßnahmen ersetzt werden kann.

Entsprechend des Oberbegriffs des Anspruchs 1 erfolgt die Zustandsbestimmung des Rotorblattes, indem das aus den akkumulierten Einzelspektren ermittelte Zustandsspektrum mit den in einer Auswerteeinheit hinterlegten Referenzspektren vergleichen wird, welche parametrisiert sind und definierte Schadens- und Sonderzustände des speziellen Rotorblattes oder zumindest des Rotorblatttyps kennzeichnen. Da jene die Eigenfrequenzen des Rotorblattes bestimmenden Materialkennwerte auch sehr stark von meteorologischen und Anlagendaten abhängen, erweist es sich von besonderem Vorteil, wenn die Parametrierung der Referenzspektren durch meteorologische und/oder anlagenspezifische Daten erfolgt und zu diesem Zweck an der Windkraftanlage weitere Sensoren zur Messung meteorologischer und/oder anlagenspezifischer Messwerte und/oder anlagenspezifischer Schwingungszustände angeordnet sind. Sofern die Überwachung mehrerer benachbarter Windkraftanlagen erfolgt, können selbstverständlich auch die meteorologischen Messwerte einer entsprechend ausgestatteten Windkraftanlage für die anderen mit genutzt werden.

Für den Spektrenvergleich ist in einer weiteren Ausgestaltung des Verfahrens vorgesehen, dass die Parameter der Referenzspektren parallel zur Körperschallmessung durch weitere Messungen aktuell ermittelt und an die Auswerteeinheit übertragen werden. Auf diese Weise kann der Vergleich auf die Spektren mit ähnlichen aktuellen Referenzparametern beschränkt werden, was insbesondere in jenen Fällen von Bedeutung ist, wenn wegen fehlender Referenzspektren spezieller Rotorblatttypen die Zustandsspektren einer statistischen Bewertung oder Äquivalenzbetrachtungen unterzogen werden müssen.

Darüber hinaus kann der Vergleich der gemessenen Zustandsspektren mit den Referenzspektren mittels geeigneter Mustererkennungsverfahren und somit deren automatisierte Klassifizierung erfolgen, wie aus der Informatik bekannt ist. Auch die Anwendung geeigneter statistischer Methoden kann für die Zuordnung der gemessenen Frequenzspektren zu den Referenzspektren vorteilhaft sein, da eine genaue Übereinstimmung der zu vergleichenden Spektren praktisch nicht eintreten wird. Insbesondere für die Mustererkennung aber auch für den direkten Spektrenvergleich sieht eine weitere Ausgestaltung der Erfindung vor, dass die aus der Spektrenanalyse ermittelten Eigenfrequenzwerte sowie deren Amplituden in Vektoren oder Matrizen dargestellt werden.

Von besonderem Vorteil für die reproduzierbare Zustandsbestimmung eines Rotorblattes erweist es sich auch, wenn die Frequenzspektren der Einzelmessungen des Rotorblattes von den Störungen bereinigt werden, welche von der Anlage auf das Rotorblatt übertragen werden, und zwar indem die Störungen, beispielsweise des Antriebs, als Frequenzspektrum Berücksichtigung finden. Zu diesem Zweck werden Körperschallmessung mittels eines oder mehrerer ein- oder mehrdimensionaler Sensoren vorzugsweise in der Umgebung der Störungsquelle durchgeführt und daraus die Frequenzspektren der Störungen ermittelt, welche von der Störungsquelle auf die Rotorblätter übertragen werden. Mit diesen Störungsspektren werden die Spektrenänderungen aus den Messungen an den Rotorblättern mit geeigneten mathematischen Methoden korrigiert, so dass sie nicht Veränderungen an den Rotorblättern zugeordnet werden können.

Die Störsignale können bei der Feststellung eines Schadenszustandes an einem Rotorblatt auch durch eine vergleichende Spektralanalyse der an allen drei Rotorblättern 1 vorzugsweise synchron gemessenen Zustandsspektren ermittelt und zur Korrektur verwendet werden, da der Störungseintrag im Gegensatz zur Zustandsänderung eines Rotorblattes gleichmäßig in alle drei Rotorblätter erfolgt und zur gleichen Änderung aller drei Zustandsspektren führt. Dafür werden entsprechend einer weiteren Ausgestaltung der Erfindung synchronisierte Messungen aller Rotorblätter einer Windkraftanlage durchgeführt und die Zustandsänderung eines Rotorblattes aus der Differenz der akkumulierten Frequenzspektren aller Rotorblätter und dem Vergleich des Differenzspektrums mit Referenzspektren ermittelt.

Mit den verschiedenen Störungsmessungen wird kontinuierlich eine so genannte Basislinie ermittelt, welche die systemeigenen Einflüsse auf die Zustandsspektren darstellt und mit welcher die gemessenen Zustandspektren laufend aktuell korrigiert werden können.

Da mit dem erfindungsgemäßen Verfahren auch solche Schadenszustände feststellbar sind, welche die Fortsetzung des Betriebes der Windkraftanlage für eine gewisse Zeit ohne Gefährdung der Anlage gestatten, erweist es als günstig, dass die Referenzspektren in zumindest zwei Zustandsgruppen untergliedert sind und mittels des Spektrenvergleichs der Zustand eines Rotorblattes einer der Zustandsgruppen zugeordnet wird. Die beiden hauptsächlichen Zustandsgruppen könnten beispielsweise "erhebliche" und "nichterhebliche" Abweichungen vom Normalzustand sein, wobei nur die erheblichen Abweichungen eine sofortige Instandsetzung oder gar Unterbrechung des Betriebes erfordern. Hingegen gestatten die nichterheblichen Abweichungen eine Fortsetzung des Betriebes und gegebenenfalls kürzere Prüfzyklen oder die Einordnung der Instandsetzung in den nächstmöglichen, z. B. windarmen Zeitraum. Für diese Entscheidungsvarianten können darüber hinaus weitere Unterteilungen der Abweichungen vorgenommen werden, beispielsweise entsprechend dem Ort der Veränderungen, am Trag- oder aerodynamischen System, oder entsprechend verschiedener Sonderzustände, Eisansatz oder Resonanz.

Ein sehr kritischer Sonderzustand ist der Eisansatz an den Rotorblättern, einerseits wegen der stark zunehmenden Belastung durch das ungleichmäßige Gewicht des Eises und andererseits wegen der Spannungen, die von der Eisschicht auf die aerodynamische Schale des Rotorblattes übertragen werden. Die Entspannung des Eises und mitunter auch lokales Abreißen der Eisschicht von der Rotorblattschale lassen sich durch stochastische, impulsartige Schallereignisse feststellen, die teilweise als Knackgeräusche im hörbaren Frequenzbereich wahrgenommen werden. Da sich diese Schallereignisse in den Frequenzspektren der Rotorblätter durch eine Vielzahl von Oberwellen im niederfrequenten Bereich widerspiegeln, werden entsprechend einer besonderen Ausführung der Erfindung die Oberwellen im akkumulierten Frequenzspektrum und insbesondere die Oberwellen der Drehfrequenz der Rotorblätter im akkumulierten Spektrum bestimmt. Die Korrelation der Schallereignisse mit der Drehfrequenz ist darauf zurückzuführen, dass es insbesondere im Verlauf der Drehbewegung zu Lastwechseln und damit zusammenhängenden Reiß- und Stoßprozessen im Eis und somit zu dem festgestellten charakteristischen Oberwellenbild kommt.

Für die unmittelbare Reaktion auf die ermittelten Rotorblattzustände sieht eine weitere, günstige Ausgestaltung des Verfahrens vor, dass bei definierten Zuständen eines Rotorblattes in der Auswerteeinheit, welche entsprechend einer günstigen Ausgestaltung der Vorrichtung zur Überwachung der Rotorblätter eine Ausgabeeinheit, vorzugsweise mit einem binären Ausgangsmodul, umfasst, eine Zustandsmeldung erzeugt, diese an das Anlagensteuerungssystem der Windkraftanlage übertragen und auf den Betrieb der Windkraftanlage Einfluss genommen wird. Die Zustandsmeldungen liegen vorzugsweise in Form von eigen- und fremdstörungssicheren, binären und redundanten, Statussignalen bereit, welche an das Anlagensteuerungssystem übergeben werden können, um unmittelbar Einfluss auf die Betriebsweise der Windkraftanlage nehmen zu können, wenn entsprechende Schadzustände ermittelt wurden. Die Einflussnahme erfolgt je nach ermitteltem Schadens- oder Sonderzustand beispielsweise in Form einer Pitch-Winkel-Verstellung oder auch Außer-Betrieb-Setzen der Anlage, kann jedoch ebenso ein In-Betrieb-Setzen der Anlage nach der Beendigung von Eisansatz sein.

Neben der beschriebenen Zustandsbestimmung mittels Schwingungsanregung durch den laufenden Betrieb kann es auch von Vorteil sein, dass ein Rotorblatt mittels eines Schwingungserregers aktiv angeregt wird. Dies kommt insbesondere für die Offline-Messungen in Betracht, kann aber auch für Online-Messungen verwendet werden, um beispielsweise eine aus vorangegangenen Messungen bekannte Eigenfrequenz zu überprüfen. Die aktive Anregung des jeweiligen Bauteils für Offline-Messungen erfolgt mit zumindest einem ein- oder mehrdimensionalen Schwingungserreger (Aktor), welcher geeignet auf dem Rotorblatt oder an einem inneren Bauteil des Rotorblattes angeordnet ist. Der Aktor ist vorzugsweise ein so genannter Shaker mit Leistungsverstärker, der das Rotorblatt über einen relevanten Frequenzbereich anregt, indem er diesen Frequenzbereich durchläuft (Sweep-Modus). Die Steuerung der Schwingungserregung erfolgt günstigerweise durch eine zentrale Rechnereinheit. Um.die Mikroschwingungen des Rotorblattes nicht zu dämpfen, durch Störeinflüsse nicht zu überlagern oder um den montierten Zustand zu simulieren ist bei Einzelmessungen eines einzelnen Rotorblattes dieses geeignet einzuspannen oder aufzuhängen. Derartige Einzelmessungen werden im Anschluss an das Herstellungsverfahren zur Qualitätsprüfung und zur Gewinnung von für das Rotorblatt charakteristischen Referenzspektren durchgeführt, dienen aber ebenso der Kontrolle nach dem Transport oder in verschiedenen Montagestadien der Windkraftanlage.

Sofern die Spektrenbibliothek für einen bestimmten Rotorblatttyp kein Referenzspektrum umfasst oder aus anderen Gründen keines der vorgehaltenen Referenzspektren zum vergleich herangezogen werden können, ist es auch möglich, dass die Referenzspektren aus statistisch bewerteten und einer Äquivalenzbetrachtung unterzogenen Frequenzspektren vorangegangener Körperschallmessungen des relevanten Rotorblattes ermittelt werden. Das so gewonnene Zustandsspektrum wird einer Spektrenanalyse unterzogen und die numerischen Werte für im Spektrum enthaltene Eigenfrequenzen, gegebenenfalls Grund- und Oberwellen, und Ihre Amplituden gewonnen, die z. B. dann in Vektoren oder einer Matrix dargestellt werden. Diese am Anfang des Einsatzes des Rotorblattes gewonnenen Spektren werden in der zentralen Rechnereinheit mit zusammengestellt.

Entsprechend einer weiteren Ausgestaltung der Erfindung erfolgt die drahtlose Übertragung der weiter- und vorverarbeiteten Messsignale des Sensors mittels Funkübertragung. Damit bestehen für den Betreiber der Windkraftanlage verschiedenste Möglichkeiten der Anordnung der Auswerteeinheit, je nach Platz, Zugänglichkeit, Anbindung an ein weiterverarbeitendes System oder anderen Kriterien. So kann die Auswerteeinheit oder zumindest Teile davon beispielsweise in der Gondel, im Fuß des Turmes oder räumlich von der Windkraftanlage getrennt, entsprechend einer besonderen Ausgestaltung der Vorrichtung, als zentrale, mehrere Windkraftanlagen überwachende Auswerteeinheit installiert werden, wobei die Art der eingesetzten Funkübertragung auch von der Entfernung zwischen den Kommunikationspartnern Auswerteeinheit und Sensor-Versorgungs- und Messwert-Vorverarbeitungseinheit abhängig ist. Zu berücksichtigen ist ebenfalls, dass es sich teilweise um zeitkritische Prozessdaten handelt, wie beispielsweise bei der Resonanzüberwachung oder dem Nachweis von Eisansatz.

Entsprechend einer besonders vorteilhaften Vorrichtung zur Ausführung des Überwachungsverfahrens sind der oder die Sensoren im Inneren und/oder Äußeren des Rotorblattes fest an einer Fläche der aerodynamischen Schale und/oder an inneren Bauteilen des Rotorblattes befestigt. Da die Überwachung anhand der aus akkumulierten Einzelspektren gewonnenen Eigenfrequenzen erfolgt, ist es möglich, sowohl die aerodynamische Schale als auch jene die Schale stützenden inneren, tragenden Bauteile oder andere Konstruktionselemente zu überwachen. Je nach Belastungsprofil des Rotorblattes können dafür insbesondere an den kritischen Stellen des Traggerüstes und der Schale Sensoren montiert werden, indem sie fest mit deren Fläche verbunden werden. So sieht eine weitere Ausgestaltung der Vorrichtung beispielsweise vor, dass zumindest ein Sensor im unteren, dem Rotorblattfuß zugewandten Drittel des Rotorblattes an einer Fläche der aerodynamischen Schale des Rotorblattes befestigt ist.

Die Befestigung kann mit den verschiedensten Verfahren erfolgen, die geeignet sind, die Schwingungen nahezu dämpfungsfrei auf den Sensor zu übertragen und gleichzeitig der dauerhaften Belastung zu widerstehen. Eine mögliche Ausgestaltung der erfindungsgemäßen Vorrichtung sieht beispielsweise vor, dass im Inneren und/oder Äußeren des Rotorblattes an verschiedenen, schwingungsrelevanten Stellen Halterungen zur Aufnahme von Sensoren angeordnet sind. Diese Halterungen können problemlos im Zuge der Montage des Rotorblattes befestigt werden, während die Sensoren später entsprechend den Anforderungen und der weiteren Messtechnik des jeweiligen Betreibers individuell und gegebenenfalls auch durch den Betreiber selbst montiert werden können. Darüber hinaus ist es möglich, später einzelne Sensoren auszutauschen oder nachzurüsten.

Besonders vorteilhaft erweist es sich des Weiteren, wenn die Sensoren Beschleunigungssensoren sind, denn diese Sensoren werden vorwiegend zur Schwingungsmessung eingesetzt, so dass es die verschiedensten Ausführungen für die verschiedensten Anforderungsprofile gibt. Selbstverständlich können aber auch andere geeignete Schwingungssensoren zur Anwendung kommen.

So erweist es sich als günstig, wenn ein eindimensionaler Sensor zur Anwendung kommt und dieser eine Bewegungsorientierung aufweist, die im Wesentlichen senkrecht zu der Fläche ausgerichtet ist, an welcher der Sensor befestigt ist. In dieser Anordnung und Ausrichtung des Sensors werden die Transversalwellen des Körperschalls der Schale gemessen, welche für die nachfolgende Körperschallanalyse den größten Informationsgehalt aufweisen, so dass die eindimensionale Messung hinsichtlich Auswertungsaufwand und Kosten ein günstiges Verfahren für die laufende Überwachung während des Betriebes der Windkraftanlage darstellt.

Selbstverständlich können, beispielsweise um eine Lokalisierung bereits kleiner Schädigungen am Rotorblatt vornehmen zu können, gleichzeitig oder anstelle dieses einzelnen, flächennormal ausgerichteten eindimensionalen Sensors auch zwei- oder mehrdimensionale Sensoren verwendet werden, die auch eine andere Ausrichtung ihrer Bewegungsorientierung aufweisen können.

Bei der Verwendung von mehreren Sensoren, unabhängig ob ein- oder mehrdimensional, ist die Messung durch die Sensoren in der bereits beschriebenen Weise für die Zustandsbestimmung eines Rotorblattes vorzugsweise zu synchronisieren, beispielsweise durch einen weiteren, für die Drehwinkelmessungen geeignet Triggersensor. Damit ist es möglich, die verschiedenen Schwingungsrichtungen eines definierten Schwingungszustandes zu betrachten.

Günstig erweist es sich darüber hinaus, wenn mittels weiterer Sensoren Daten und Parameter des Rotorblattes direkt bestimmt werden. So kann sich die Umgebungstemperatur von der Temperatur des Rotorblattes und gegebenenfalls auch die Temperatur der Vorderseite von der Temperatur der Rückseite des Rotorblatts unterscheiden, so dass in vorteilhafter Weise die Temperaturmessung des Rotorblatts unabhängig von den Messungen des Meteorologiemoduls durch einen oder mehrere Temperatursensoren am Rotorblatt erfolgen kann. Bei pitch-geregelten Anlagen ist des Weiteren die reale Messung des Pitch-Winkels mittels eines am Rotorblatt befestigten Wegsensors dienlich.

In einer weiteren Ausführungsform der Überwachungsvorrichtung ist in der Auswerteeinheit eine Datenbank als Spektrenbibliothek mit Referenzspektren von Rotorblättern mit schadensfreien und definierten Schadens- und Sonderzuständen hinterlegt, welche vorzugsweise einen schnellen, selektiven Zugriff ermöglicht. Diese Referenzspektren sind auf den zu überwachenden Rotorblatttyp bezogen, weisen eine Datenstruktur wie das zu messende Spektrum auf und sind hinsichtlich der oben genannten erhebbaren meteorologischen und maschinenbezogenenen Messwerte parametriert sowie darunter wiederum nach Schadens- und Sonderzuständen angeordnet. Einen besonders bedeutsamen Sonderzustand stellt beispielsweise Eisansatz am Rotorblatt dar. Eine Parametrierung der Referenzspektren ist darüber hinaus auch nach solchen Daten möglich, die der laufenden Überwachung aktuell bereitgestellt oder hinterlegt werden können, wie beispielsweise seinem Anstellwinkel bezogen auf die Welle (Pitch-Winkel), dem Alter des Rotorblattes, der Charge, weiteren fertigungstechnischen Unterscheidungen oder ähnlichen relevanten physikalisch-technischen Parametern. Diese Referenzspektren wurden beispielsweise von Messungen an Windkraftanlagen, an denen Schadzustände aufgetreten sind, durch Offline-Messungen an ungeschädigten und geschädigten Rotorblättern am Boden und oder durch Äquivalenzbetrachtungen ermittelt.

Insbesondere für die laufende Aktualisierung der Spektrenbibliothek, beispielsweise aus den kontinuierlich gewonnenen Messwerten, für die allgemeine Datensicherung oder für den Informationsaustausch zwischen den gemeinsam überwachten Windkraftanlagen sowie zwischen den Anlagen und den Betreibern erweist es sich als günstig, dass die Auswerteeinheit mit einem dezentralen, fernaufgestellten Backupserver verbunden ist. Auf dem Backupserver sind unter anderem die Kommunikationsdaten von Betreibern und Betriebsführern von Windkraftanlagen abgelegt. Im Ereignisfall kann der Backupserver auch Informationen an diese Personengruppe übermitteln.

Das Verfahren und die dafür erforderliche Vorrichtung sollen in einem Ausführungsbeispiel einer Windkraftanlage mit drei Rotorblättern erläutert werden. Die zugehörige Zeichnung zeigt in
- Fig. 1: die schematische Gesamtansicht einer Windkraftanlage,
- Fig. 2: die schematische Darstellung eines Rotorblattes,
- Fig. 3: die schematische Schnittdarstellung eines Rotorblattes und
- Fig. 4: einen schematischen Blockschaltplan der erfindungsgemäßen Vorrichtung.

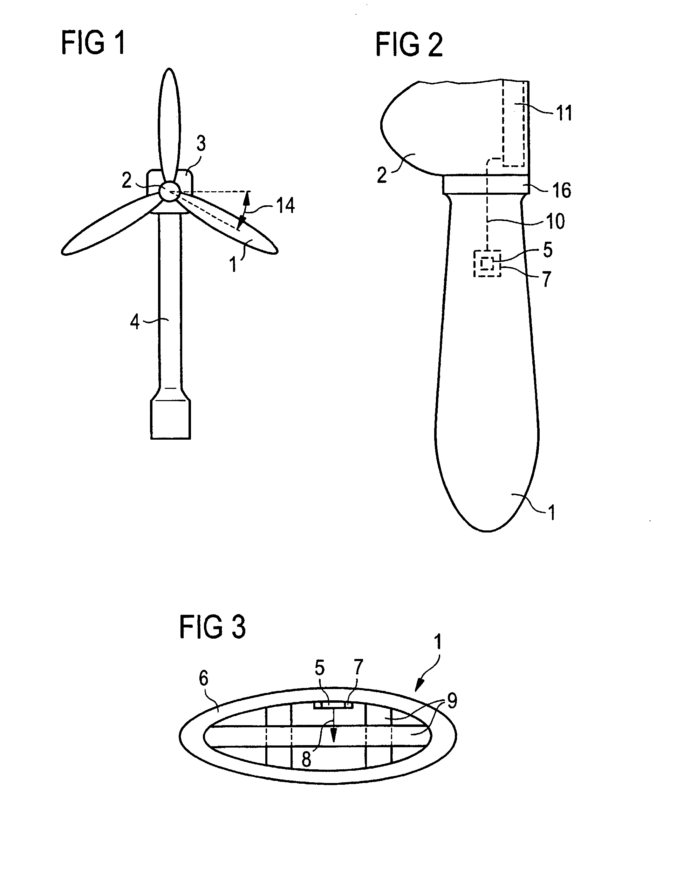

In Fig. 1 ist die Gesamtansicht einer Windkraftanlage mit drei Rotorblättern 1 dargestellt, welche an einer Nabe 2 befestigt sind. Die Nabe 2 wiederum geht in eine horizontal gelagerte Welle über. Die Welle endet in einer Gondel 3, welche die nicht näher dargestellte Maschinentechnik umfasst und am oberen Ende eines Turmes 4 drehbar um eine vertikale Achse angeordnet ist.

In dem dargestellten Ausführungsbeispiel ist gemäß Fig. 2 auf einer inneren Fläche der großflächigen, freien aerodynamischen Schale 6 eines Rotorblattes 1 in seinem unteren, dem Rotorblattfuß 16 zugewandten Drittel ein eindimensionaler Beschleunigungssensor 5 befestigt. Er ist fest mit der aerodynamischen Schale 6 des Rotorblattes 1 verbunden, indem er in eine auf die Schale 6 dauerhaft aufgeklebte Halteplatte 7 eingeschraubt ist. Der Sensor 5 ist über ein im Inneren des Rotorblattes 1 verlaufendes Kabel 10 mit einer Sensor-Versorgungs- und Messwert-Vorverarbeitungseinheit 11 verbunden, welche sich in der Nabe 2 befindet. Im Ausführungsbeispiel ist das Kabel 10, ebenso wie der Sensor 5, mit einer Schutzumhüllung gegen mechanische Beschädigungen und einer Abschirmung gegen elektrische Felder, die beispielsweise von Blitzableitungssystemen ausgehen können, geschützt. Die übrigen beiden Rotorblätter der Windkraftanlage sind mit jeweils einem weiteren Beschleunigungssensor bestückt, welche beide über je ein weiteres Kabel mit der Sensor-Versorgungs- und Messwert-Vorverarbeitungseinheit 11 verbunden sind.

Die Sensor-Versorgungs- und Messwert-Vorverarbeitungseinheit 11 ist mittels drahtloser Übertragung, z. B. mittels Funkübertragung, mit einer in Fig. 2 nicht näher dargestellten Auswerteeinheit 12 verbunden, die sich in der Gondel 3 oder im Fuß des Turmes 4 befindet und in der Regel über eine Schnittstelle 15 mit weiteren Rechnern 26 vernetzt ist. Die Vorrichtung umfasst des Weiteren ein Betriebsdaten- 18 und ein Meteorologiemodul 17, welche ebenfalls nicht näher dargestellt sind und sich in der Gondel 3, im Turm 4 oder einer anderen, für die Erfassung dieser Daten geeigneten Stelle befindet.

Wie in Fig. 3 dargestellt wird die aerodynamische Schale 6 von inneren, tragenden Bauteilen 9 gestützt. Der Beschleunigungssensor 5 ist auf der Innenfläche der aerodynamischen Schale 6 derart mittels Halteplatte 7 befestigt, dass die Beschleunigungsrichtung des Sensors 5 senkrecht zur Halteplatte 7 und somit flächennormal zur aerodynamischen Schale 6 ausgerichtet ist.

Im Folgenden soll eine Zustandsmessung eines Rotorblattes 1 an der in Betrieb befindlichen Windkraftanlage (Online-Messung) beschrieben werden, wobei die Auswertung der Messsignale, der Vergleich mit den Referenzspektren und die Zustandsbewertung des Rotorblattes 1 für diese und für Messungen an außer Betrieb befindlichen Anlagen oder einzelnen, nicht montierten Rotorblättern (Offline-Messung) vergleichbar sind.

Die erforderliche Schwingungsanregung erfolgt bei den Online-Messungen in der Regel durch den Betrieb an sich und den dabei auf das Rotorblatt 1 angreifenden Wind. Der in der aerodynamischen Schale 6 des Rotorblattes 1 befestigte Sensor 5 liefert infolge dieser laufenden Schwingungsanregung elektrische, analoge Signale als zeitbezogene Amplitudensignale, die über die Kabel 10 zur Sensor-Versorgungs- und Messwert-Vorverarbeitungseinheit 11 in der Nabe 2 geführt werden.

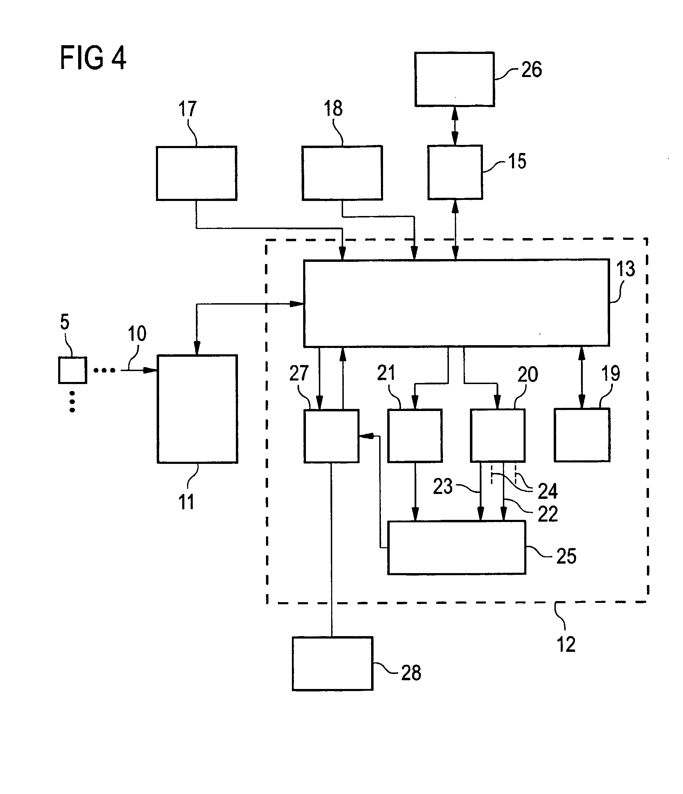

In der Sensor-Versorgungs- und Messwert-Vorverarbeitungseinheit 11, welche gleichzeitig der Sensor-Versorgung dient, erfolgt die Digitalisierung der Signale, die Funkübertragung zur Auswerteeinheit 12, welche eine zentrale Rechnereinheit 13 aufweist (Fig. 4) und auch die Messsteuerung, um eine zuverlässige Steuerung, unabhängig von der Funkübertragung zwischen der Sensor-Versorgungs- und Messwert-Vorverarbeitungseinheit 11 und der zentralen Rechnereinheit 13 zu gewährleisten. Für eine Zustandsmessung werden nacheinander mehrere, beispielsweise 20, Einzelmessungen aufgenommen und der Auswerteeinheit 12 zugeführt. Jede Einzelmessung wird mittels der Sensor-Versorgungs- und Messwert-Vorverarbeitungseinheit 11 hinsichtlich ihres Messstarts auf einen zwar beliebigen, aber für die Messperiode einheitlichen Drehwinkel 14 getriggert. Die Triggerung erfolgt im Ausführungsbeispiel durch einen weiteren, nicht näher dargestellten Sensor, der eine Drehwinkelinformation für die zeitliche Steuerung an die Sensor-Versorgungs- und Messwert-Vorverarbeitungseinheit 11 übergibt.

In der zentralen Rechnereinheit 13 wird mittels Fouriertransformation aus den aufgenommenen Zeitsignalen der Einzelmessungen je Rotorblatt 1 ein eindimensionales Spektrum gewonnen. Die Einzelspektren als fouriertransformierte Abbildungen der Einzelmessungen werden nachfolgend akkumuliert, wobei bekannte Normierungs- und Wichtungsverfahren auf die Einzelspektren angewendet werden.

Parallel zur Körperschallmessungen der Rotorblätter 1 werden in vergleichbarer Weise mit einem oder vorzugsweise mehreren ein- oder mehrdimensionalen Sensoren 5 Körperschallsignale, die von dem Antriebsstrang der Windkraftanlage auf die Rotorblätter 1 übertragen werden, bestimmt und ausgewertet. Mit diesen Störungsspektren werden die Spektrenänderungen aus den Messungen an den Rotorblättern 1 korrigiert.

Das so gewonnene Zustandsspektrum wird einer Spektrenanalyse unterzogen und die numerischen Werte für im Spektrum enthaltene Eigenfrequenzen, gegebenenfalls Grund- und Oberwellen, und Ihre Amplituden gewonnen, die z. B. dann in Vektoren oder einer Matrix dargestellt werden.

Darüber hinaus werden während der Zustandsmessung des Rotorblattes 1 durch das System selbst, einem Meteorologiemodul 17 sowie Betriebsdatenmodul 18, aktuelle Messwerte an die zentrale Rechnereinheit 13 übermittelt, wie beispielsweise Temperatur des Rotorblattes 1, die Leistung der Windkraftanlage oder ersatzweise die Windgeschwindigkeit und Betriebsdauer des jeweiligen Rotorblattes 1.

In einer Spektrenbibliothek 19, die Teil der Auswerteeinheit 12 ist, sind in einer solchen Datenbank, die vorzugsweise einen schnellen selektiven Zugriff gewährleistet, auf den Rotorblatttyp bezogene Referenzspektren bereitgestellt, die eine Datenstruktur wie das gemessene Spektrum aufweisen, im Ausführungsbeispiel als Vektor oder Matrix, und die hinsichtlich der oben genannten erhebbaren Messwerte parametriert und darunter wiederum nach Schadens- und Sonderzuständen angeordnet sind. Diese Referenzspektren wurden von Messungen an Windkraftanlagen, an denen Schadenszustände aufgetreten sind, durch Offline-Messungen an ungeschädigten und geschädigten Rotorblättern 1 am Boden und oder durch Äquivalenzbetrachtungen ermittelt.

Mit einem geeigneten mathematisch statistischen Verfahren, welches beispielsweise mit definierten Vertrauensintervallen und weiteren statistischen Parametern, wie dem Bestimmtheitsmaß, arbeitet, wird das jeweils online quasikontinuierlich gemessene Zustandsspektrum hinsichtlich der von dem Meteorologiemodul 17 und dem Betriebsdatenmodul 18 bereitgestellten und der Weiteren bekannten, technisch-physikalischen Parameter sortiert, mit den in der Datenbank unter gleicher Parametrierung vorgehaltenen Referenzspektren verglichen und der aktuelle Zustand des jeweiligen Rotorblattes 1, entweder Normalzustand 21 oder Schadens- oder Sonderzustand 20, festgestellt. Ist ein Schadens- oder Sonderzustand 20 festgestellt, können weitere, untergeordnete Zustände ermittelt werden, wie erhebliche 22 und nichterhebliche Abweichungen 23 des Rotorblattzustands vom Normalzustand. Diese oder eine andere Untergliederung der Schadens- und Sonderzustände, die weitere Abweichungen 24 berücksichtigt, erfolgt entsprechend der Parametrierung der Spektrenbibliothek 19. Nicht zuordenbare Zustandsspektren werden insbesondere aus Sicherheitsgründen als gestört eingeordnet und können gegebenenfalls durch Gutachter interpretiert werden.

Jeder ermittelte zustand 21 bis 24 wird einem Betriebsentscheidungsmodul 25 übertragen und eine entsprechende Zustandsmeldung wird erzeugt. Die Zustandsmeldung wiederum wird an eine Ein- und Ausgabeeinheit 27 übermittelt, welche Teil der Auswerteeinheit 12 ist und z. B. ein binäres Ausgangsmodul umfasst, über das die Zustandsmeldungen redundant, fremd- und eigensicher an das Anlagensteuerungssystem 28 übergeben werden können. Eine Visualisierung der gemessenen Daten, der abgelegten und der ereignisbezogenen Daten, wird ebenfalls über die Ein- und Ausgabeeinheit 27 oder auch über den Backupserver 26 realisiert, auf den ein dazu berechtigter Nutzer über einen Web-Browser Zugang haben kann.

Die kontinuierlich gewonnenen Daten der Messzyklen der zentralen Rechnereinheit 13 werden in gewissen festen Perioden und bei Ereignissen unmittelbar und mittels Datenfernübertragung über eine geeignete Schnittstelle 15 in einem der zentralen Rechnereinheit 13 unabhängigen Backupserver 26 abgelegt, der wiederum in eine Datensicherung integriert ist.

### Bezugszeichenliste

- 1: Rotorblatt
- 2: Nabe
- 3: Gondel
- 4: Turm
- 5: Sensor, Beschleunigungssensor
- 6: aerodynamische Schale
- 7: Halteplatte, Halterung
- 8: Bewegungsorientierung
- 9: tragende Bauteile
- 10: Kabel
- 11: Sensor-Versorgungs- und Messwert-Vorverarbeitungseinheit
- 12: Auswerteeinheit
- 13: zentrale Rechnereinheit
- 14: Drehwinkel
- 15: Schnittstelle
- 16: Rotorblattfuß
- 17: Meteorologiemodul
- 18: Betriebsdatenmodul
- 19: Spektrenbibliothek
- 20: Feststellung Schadens- oder Sonderzustand
- 21: Feststellung Normalzustand
- 22: erhebliche Abweichung
- 23: nichterhebliche Abweichung
- 24: weitere Abweichungen
- 25: Betriebsentscheidungsmodul
- 26: weitere Rechner, Backupserver
- 27: Ein- und Ausgabeeinheit
- 28: Anlagensteuerungssystem

## Patentansprüche

1. Verfahren zur Überwachung des Zustandes von Rotorblättern an Windkraftanlagen mittels Messung von Körperschall zumindest eines Rotorblattes mit zumindest einem am Rotorblatt befestigten Sensor, welcher verbunden ist mit einer Einheit zur drahtlosen Übertragung der Ausgangssignale der Sensoren an eine Auswerteeinheit, welche eine zentrale Rechnereinheit und Speichereinheiten umfasst, wobei die Ausgangssignale des Sensors drahtlos an die Auswerteeinheit übertragen werden, wo aus den Signalen mittels geeigneter Methoden ein Frequenzspektrum ermittelt, das Frequenzspektrum mit in der Auswerteeinheit hinterlegten, definierten Schadens- und Sonderzuständen entsprechenden und parametrisierten Referenzspektren verglichen und daraus der Zustand des Rotorblattes ermittelt wird, **dadurch gekennzeichnet, dass** eine Körperschallmessung aus einer Abfolge einer Mehrzahl von unmittelbar nacheinander durchgeführten Einzelmessungen (Messperiode) erfolgt, von denen jede durch den mit dem Rotorblatt rotierenden Sensor aufgenommen und deren Start auf einen einheitlichen Drehwinkel (14) des Rotorblattes (1), bezogen auf die Drehachse des Rotors, getriggert wird, alle ermittelten Frequenzspektren jeder Einzelmessung akkumuliert werden und das durch Akkumulation ermittelte Frequenzspektrum mit den Referenzspektren verglichen wird.

2. Verfahren zur Überwachung des zustandes von Rotorblättern nach Anspruch 1, **dadurch gekennzeichnet, dass** die Körperschallmessung eines Rotorblattes (1) mehrdimensional mit mehreren Sensoren (5) erfolgt, welche vorzugsweise unterschiedlich ausgerichtet und synchronisiert sind.

3. Verfahren zur Überwachung des Zustandes von Rotorblättern nach Anspruch 2, **dadurch gekennzeichnet, dass** die Schwingungscharakterisierung in einem geeigneten Koordinatensystem, vorzugsweise einem Kugelkoordinatensystem erfolgt.

4. Verfahren zur Überwachung des Zustandes von Rotorblättern nach einem der Ansprüche 1 bis 3, **dadurch gekennzeichnet, dass** die Triggerung jeder Einzelmessung einer Messperiode auf einen einheitlichen Drehwinkel (14) mittels eines weiteren Sensors (5) ausgelöst wird, der aktuelle Drehwinkelinformationen an eine, die Messung regelnde Sensor-Versorgungs- und Messwert-Vorverarbeitungseinheit (11) übergibt.

5. Verfahren zur Überwachung des Zustandes von Rotorblättern nach einem der Ansprüche 1 bis 3, **dadurch gekennzeichnet, dass** die Triggerung jeder Einzelmessung einer Messperiode auf einen einheitlichen Drehwinkel (14) softwareseitig in der Auswerteeinheit (12) erfolgt, indem jede Einzelmessung durch periodizitätsbezogene Startkriterien aus größeren Messbereichen einer oder mehrerer Messungen selektiert wird.

6. Verfahren zur Überwachung des Zustandes von Rotorblättern nach einem der Ansprüche 1 bis 5, **dadurch gekennzeichnet, dass** die Parametrierung der Referenzspektren durch meteorologische und/oder anlagenspezifische Daten erfolgt.

7. Verfahren zur Überwachung des Zustandes von Rotorblättern nach Anspruch 6, **dadurch gekennzeichnet, dass** die Parameter der Referenzspektren parallel zur Körperschallmessung durch weitere Messungen aktuell ermittelt und an die Auswerteeinheit (12) übertragen werden.

8. Verfahren zur Überwachung des Zustandes von Rotorblättern nach einem der Ansprüche 1 bis 7, **dadurch gekennzeichnet, dass** die Frequenzspektren der Einzelmessungen des Rotorblattes (1) von den Störungen bereinigt werden, welche von der Anlage auf das Rotorblatt (1) übertragen werden, indem Körperschallmessung mittels eines oder mehrerer ein- oder mehrdimensionaler Sensoren (5) vorzugsweise in der Umgebung der Störungsquelle durchgeführt und daraus die Frequenzspektren der Störungen ermittelt.

9. Verfahren zur Überwachung des Zustandes von Rotorblättern nach einem der Ansprüche 1 bis 7, **dadurch gekennzeichnet, dass** vorzugsweise synchronisierte Messungen aller Rotorblätter (1) einer Windkraftanlage durchgeführt werden und die Zustandsänderung eines Rotorblattes (1) aus der Differenz der akkumulierten Frequenzspektren aller Rotorblätter (1) und dem Vergleich des Differenzspektrums mit Referenzspektren ermittelt wird.

10. Verfahren zur Überwachung des Zustandes von Rotorblättern nach einem der Ansprüche 1 bis 9, **dadurch gekennzeichnet, dass** die Referenzspektren in zumindest zwei zustandsgruppen untergliedert sind und mittels des Spektrenvergleichs der Zustand eines Rotorblattes (1) einer der Zustandsgruppen zugeordnet wird.

11. Verfahren zur Überwachung des Zustandes von Rotorblättern nach einem der Ansprüche 1 bis 10, **dadurch gekennzeichnet, dass** Oberwellen im akkumulierten Frequenzspektrum bestimmt werden.

12. Verfahren zur Überwachung des Zustandes von Rotorblättern nach Anspruch 11, **dadurch gekennzeichnet, dass** die Oberwellen der Drehfrequenz der Rotorblätter im akkumulierten Spektrum bestimmt werden.

13. Verfahren zur Überwachung des Zustandes von Rotorblättern nach einem der Ansprüche 1 bis 12, **dadurch gekennzeichnet, dass** bei definierten Zuständen eines Rotorblattes (1) in der Auswerteeinheit (12) eine Zustandsmeldung erzeugt, diese an das Anlagensteuerungssystem (28) der Windkraftanlage übertragen und auf den Betrieb der Windkraftanlage Einfluss genommen wird.

14. Verfahren zur Überwachung des Zustandes von Rotorblättern nach einem der Ansprüche 1, bis 13, **dadurch gekennzeichnet, dass** ein Rotorblatt (1) mittels eines Schwingungserregers aktiv angeregt wird.

15. Verfahren zur Überwachung des Zustandes von Rotorblättern nach Anspruch 14, **dadurch gekennzeichnet, dass** die Anregung erfolgt, indem der Schwingungserreger einen relevanten Frequenzbereich kontinuierlich durchfährt (Sweep-Modus).

16. Verfahren zur Überwachung des Zustandes von Rotorblättern nach einem der Ansprüche 1 bis 15, **dadurch gekennzeichnet, dass** der Vergleich der gemessenen Frequenzspektren mit den Referenzspektren mittels geeigneter Mustererkennungsverfahren erfolgt.

17. Verfahren zur Überwachung des Zustandes von Rotorblättern nach einem der Ansprüche 1 bis 15, **dadurch gekennzeichnet, dass** die Zuordnung der gemessenen Frequenzspektren zu den Referenzspektren mittels geeigneter statistischer Methoden erfolgt.

18. Verfahren zur Überwachung des Zustandes von Rotorblättern nach einem der Ansprüche 1 bis 15, **dadurch gekennzeichnet, dass** die gemessenen Frequenzspektren einer Spektrenanalyse unterzogen werden und die ermittelten Eigenfrequenzwerte sowie deren Amplituden in Vektoren oder Matrizen dargestellt werden.

19. Verfahren zur Überwachung des Zustandes von Rotorblättern nach einem der Ansprüche 1 bis 18, **dadurch gekennzeichnet, dass** die Referenzspektren aus statistisch bewerteten und einer Äquivalenzbetrachtung unterzogenen Frequenzspektren vorangegangener Körperschallmessungen des relevanten Rotorblattes (1) ermittelt werden.

20. Verfahren zur Überwachung des Zustandes von Rotorblättern nach einem der Ansprüche 1 bis 19, **dadurch gekennzeichnet, dass** die drahtlose Übertragung der vor- und weiterverarbeiteten Messsignale des Sensors (5) mittels Funkübertragung erfolgt.

21. Vorrichtung zur Überwachung des Zustandes von Rotorblättern an Windkraftanlagen zur Durchführung des Verfahrens nach einem der Ansprüche 1 bis 20, **dadurch gekennzeichnet, dass** der oder die Sensoren (5) zur Körperschallmessung im Inneren und/oder Äußeren des Rotorblattes (1) fest an einer Fläche der aerodynamischen Schale (6) und/oder an inneren Bauteilen des Rotorblattes (1) befestigt sind und dass ein weiterer Sensor (5) am Rotor als Triggersensor angeordnet ist, welche für Drehwinkelmessungen geeignet ist.

22. Vorrichtung zur Überwachung des Zustandes von Rotorblättern nach Anspruch 21, **dadurch gekennzeichnet, dass** die Sensoren (5) Beschleunigungssensoren sind.

23. Vorrichtung zur Überwachung des Zustandes von Rotorblättern nach Anspruch 21 oder 22, dadurch gekenntzeichnet, dass zumindest ein eindimensionaler Sensor (5) angeordnet ist.

24. Vorrichtung zur Überwachung des Zustandes von Rotorblättern nach Anspruch 21 oder 22, **dadurch gekennzeichnet, dass** zumindest ein mehrdimensionaler Sensor (5) angeordnet ist.

25. Vorrichtung zur Überwachung des Zustandes von Rotorblättern nach einem der Ansprüche 21 bis 24, **dadurch gekennzeichnet, dass** eine Bewegungsorientierung eines Sensors (5) im wesentlichen senkrecht zu der Fläche ausgerichtet ist, an welcher der Sensor (5) befestigt ist.

26. Vorrichtung zur Überwachung des Zustandes von Rotorblättern nach einem der Ansprüche 21 bis 25, **dadurch gekennzeichnet, dass** ein Sensor (5) im unteren, dem Rotorblattfuß (16) zugewandten Drittel des Rotorblattes (1) an einer Fläche der aerodynamischen Schale (6) des Rotorblattes (1) befestigt ist.

27. Vorrichtung zur Überwachung des Zustandes von Rotorblättern nach einem der Ansprüche 21 bis 26, **dadurch gekennzeichnet, dass** ein Sensor (5) an den tragenden Bauteilen (9) im Inneren des Rotorblattes (1) befestigt ist.

28. Vorrichtung zur Überwachung des Zustandes von Rotorblättern nach einem der Ansprüche 21 bis 27, **dadurch gekennzeichnet, dass** am Rotorblatt (1) ein Temperatursensor zur Messung der Rotorblatttemperatur befestigt ist.

29. Vorrichtung zur Überwachung des Zustandes von Rotorblättern nach einem der Ansprüche 21 bis 28, **dadurch gekennzeichnet, dass** am Rotorblatt (1) ein Wegsensor zur Messung des Pitch-Winkels befestigt ist.

30. Vorrichtung zur Überwachung des Zustandes von Rotorblättern nach einem der Ansprüche 21 bis 29, **dadurch gekennzeichnet, dass** in der Auswerteeinheit (12) eine Datenbank als Spektrenbibliothek (19) mit Referenzspektren von Rotorblättern (1) mit schadensfreien und definierten Schadens- und Sonderzuständen hinterlegt ist, welche vorzugsweise einen schnellen, selektiven Zugriff ermöglicht.

31. Vorrichtung zur Überwachung des Zustandes von Rotorblättern nach einem der Ansprüche 21 bis 30, **dadurch gekennzeichnet, dass** die Auswerteeinheit (12) mit einem dezentralen, fernaufgestellten Backupserver (26) verbunden ist.

32. Vorrichtung zur Überwachung des Zustandes von Rotorblättern nach einem der Ansprüche 21 bis 31, **dadurch gekennzeichnet, dass** die Auswerteeinheit (12) eine Ausgabeeinheit (27), vorzugsweise mit einem binären Ausgangsmodul, umfasst, welches vorzugsweise eigen- und fremdsicher ist sowie vorzugsweise redundante Signale ausgibt.

33. Vorrichtung zur Überwachung des Zustandes von Rotorblättern nach einem der Ansprüche 21 bis 32, **dadurch gekennzeichnet, dass** die Ausgangssignale mehrerer Windkraftanlagen an eine gemeinsame Auswerteeinheit (12) übertragen und in dieser ausgewertet werden.

34. Vorrichtung zur Überwachung des Zustandes von Rotorblättern nach einem der Ansprüche 21 bis 33, **dadurch gekennzeichnet, dass** an der Windkraftanlage weitere Sensoren zur Messung meteorologischer und/oder anlagenspezifischer Messwerte und/oder anlagenspezifischer Schwingungszustände angeordnet sind.

35. Vorrichtung zur Überwachung des Zustandes von Rotorblättern nach einem der Ansprüche 21 bis 34, **dadurch gekennzeichnet, dass** im Inneren und/oder Äußeren des Rotorblattes (1) an verschiedenen, schwingungsrelevanten Stellen Halterungen (7) zur Aufnahme von Sensoren (5) angeordnet sind.

36. Vorrichtung zur Überwachung des Zustandes von Rotorblättern nach einem der Ansprüche 21 bis 35, **dadurch gekennzeichnet, dass** auf der aerodynamischen Schale (6) oder an einem inneren Bauteil des Rotorblattes (1) zumindest ein ein- oder mehrdimensionaler Schwingungserreger (Aktor) angeordnet ist.

37. Vorrichtung zur Überwachung des Zustandes von Rotorblättern nach Anspruch 36, **dadurch gekennzeichnet, dass** der Aktor ein Shaker mit Leistungsverstärker ist.

## Claims

1. Method for monitoring the state of rotor blades on wind power installations by means of measuring structure-borne sound of at least one rotor blade having at least one sensor which is fastened on the rotor blade and is connected to a unit for wireless transmission of the output signals of the sensors to an evaluation unit, which comprises a central computing unit and memory units, the output signals of the sensor being transmitted in wireless fashion to the evaluation unit where a frequency spectrum is determined from the signals by means of suitable methods, the frequency spectrum is compared with reference spectra which are stored in the evaluation unit, correspond to defined damage states and special states and are parameterized, and the state of the rotor blade is determined therefrom, **characterized in that** a measurement of structure-borne sound is performed from a sequence of a plurality of individual measurements which are carried out directly in succession to one another (measurement period), and of which each is recorded by the sensor rotating with the rotor blade and whose start is triggered at a uniform angle (14) of rotation of the rotor blade (1) referred to the axis of rotation of the rotor, all determined frequency spectra of each individual measurement are accumulated, and the frequency spectrum determined by accumulation is compared with the reference spectra.

2. Method for monitoring the state of rotor blades according to Claim 1, **characterized in that** the measurement of structure-borne sound of a rotor blade (1) is performed in multidimensions by a plurality of sensors (5) which are preferably differently aligned and synchronized.

3. Method for monitoring the state of rotor blades according to Claim 2, **characterized in that** the vibration characterization is performed in a suitable coordinate system preferably a spherical coordinate system.

4. Method for monitoring the state of rotor blades according to one of Claims 1 to 3, **characterized in that** the triggering of each individual measurement of a measurement period is initiated at a uniform angle (14) of rotation by means of a further sensor (5), which transfers current information on the angle of rotation to a sensor supply and measured value preprocessing unit (11) controlling the measurement.

5. Method for monitoring the state of rotor blades according to one of Claims 1 to 3, **characterized in that** the triggering of each individual measurement of a measurement period is performed at a uniform angle (14) of rotation by software in the evaluation unit (12) by selecting each individual measurement with the aid of starting criteria, referred to periodicity, from relatively large measuring ranges of one or more measurements.

6. Method for monitoring the state of rotor blades according to one of Claims 1 to 5, **characterized in that** the parameterization of the reference spectra is performed by meteorological and/or installation-specific data.

7. Method for monitoring the state of rotor blades according to Claim 6, **characterized in that** the parameters of the reference spectra are determined currently in parallel with the measurement of structure-borne sound by further measurements and are transmitted to the evaluation unit (12).

8. Method for monitoring the state of rotor blades according to one of Claims 1 to 7, **characterized in that** the frequency spectra of the individual measurements of the rotor blade (1) are relieved of the interference which is transmitted by the installation to the rotor blade (1) by measuring structure-borne sound by means of one or more one- or multidimensional sensors (5), preferably in the surroundings of the interference source, and determining the frequency spectra of the interference therefrom.

9. Method for monitoring the state of rotor blades according to one of Claims 1 to 7, **characterized in that** preferably synchronized measurements of all rotor blades (1) of a wind power installation are carried out, and the changing state of a rotor blade (1) is determined from the difference between accumulated frequency spectra of all rotor blades (1) and the comparison of the difference spectrum with reference spectra.

10. Method for monitoring the state of rotor blades according to one of Claims 1 to 9, **characterized in that** the reference spectra are subdivided between at least two state groups and the state of a rotor blade (1) is assigned to one of the state groups by means of the spectra comparison.

11. Method for monitoring the state of rotor blades according to one of Claims 1 to 10, **characterized in that** harmonics in the accumulated frequency spectrum are determined.

12. Method for monitoring the state of rotor blades according to Claim 11, **characterized in that** the harmonics of the rotational frequency of the rotor blades in the accumulated spectrum are determined.

13. Method for monitoring the state of rotor blades according to one of Claims 1 to 12, **characterized in that**, given defined states of a rotor blade (1), there is generated in the evaluation unit (12) a state message which is transmitted to the installation control system (28) of the wind power installation, and influences the operation of the wind power installation.

14. Method for monitoring the state of rotor blades according to one of Claims 1 to 13, **characterized in that** a rotor blade (1) is actively excited by means of a vibration excitor.

15. Method for monitoring the state of rotor blades according to Claim 14, **characterized in that** the excitation is performed by having the vibration excitor continuously traverse a relevant frequency range (sweep mode).

16. Method for monitoring the state of rotor blades according to one of Claims 1 to 15, **characterized in that** the comparison of the measured frequency spectra with the reference spectra is performed by means of suitable pattern recognition methods.

17. Method for monitoring the state of rotor blades according to one of Claims 1 to 15, **characterized in that** the assignment of the measured frequency spectra to the reference spectra is performed by means of suitable statistical methods.

18. Method for monitoring the state of rotor blades according to one of Claims 1 to 15, **characterized in that** the measured frequency spectra are subjected to a spectra analysis, and the determined natural frequency values and their amplitudes are represented in vectors or matrices.

19. Method for monitoring the state of rotor blades according to one of Claims 1 to 18, **characterized in that** the reference spectra are determined from frequency spectra of preceding measurements of structure-borne sound of the relevant rotor blade (1) which can be statistically evaluated and subjected to a consideration of equivalence.

20. Method for monitoring the state of rotor blades according to one of Claims 1 to 19, **characterized in that** the wireless transmission of the preprocessed and further processed measurement signals of the sensor (5) is performed by means of radio transmission.

21. Device for monitoring the state of rotor blades on wind power installations for carrying out the method according to one of Claims 1 to 20, **characterized in that** the sensor/sensors (5) for measuring structure-borne sound are firmly fastened inside and/or outside the rotor blade (1) on a surface of the aerodynamic shell (6) and/or on internal components of the rotor blade (1), and **in that** a further sensor (5) which is suitable for measuring angles of rotation is arranged on the rotor as trigger sensor.

22. Device for monitoring the state of rotor blades according to Claim 21, **characterized in that** the sensors (5) are acceleration sensors.

23. Device for monitoring the state of rotor blades according to Claim 21 or 22, **characterized in that** at least one one-dimensional sensor (5) is arranged.

24. Device for monitoring the state of rotor blades according to Claim 21 or 22, **characterized in that** at least one multidimensional sensor (5) is arranged.

25. Device for monitoring the state of rotor blades according to one of Claims 21 to 24, **characterized in that** a motion orientation of a sensor (5) is aligned substantially perpendicular to the surface on which the sensor (5) is fastened.

26. Device for monitoring the state of rotor blades according to one of Claims 21 to 25, **characterized in that** a sensor (5) is fastened on a surface of the aerodynamic shell (6) of the rotor blade (1) in the lower third, facing the rotor blade root (16), of the rotor blade (1).

27. Device for monitoring the state of rotor blades according to one of Claims 21 to 26, **characterized in that** a sensor (5) is fastened on the supporting components (9) inside the rotor blade (1).

28. Device for monitoring the state of rotor blades according to one of Claims 21 to 27, **characterized in that** a temperature sensor for measuring the rotor blade temperature is fastened on the rotor blade (1).

29. Device for monitoring the state of rotor blades according to one of Claims 21 to 28, **characterized in that** a position sensor for measuring the pitch angle is fastened on the rotor blade (1).

30. Device for monitoring the state of rotor blades according to one of Claims 21 to 29, **characterized in that** a database is stored in the evaluation unit (12) as spectra library (19) with reference spectra of rotor blades (1) with undamaged and defined damage and special states which preferably enables a rapid, selective access.

31. Device for monitoring the state of rotor blades according to one of Claims 21 to 30, **characterized in that** the evaluation unit (12) is connected to a decentralized, remotely set up backup server (26).

32. Device for monitoring the state of rotor blades according to one of Claims 21 to 31, **characterized in that** the evaluation unit (12) comprises an output unit (27) which preferably has a binary output module, is preferably intrinsically and externally safe, and preferably outputs redundant signals.

33. Device for monitoring the state of rotor blades according to one of Claims 21 to 32, **characterized in that** the output signals of a plurality of wind power installations, are transmitted to a common evaluation unit (12) and evaluated therein.

34. Device for monitoring the state of rotor blades according to one of Claims 21 to 33, **characterized in that** further sensors for measuring meteorological and/or installation-specific measured values and/or installation-specific vibration states are arranged on the wind power installation.

35. Device for monitoring the state of rotor blades according to one of Claims 21 to 34, **characterized in that** holders (7) for accommodating sensors (5) are arranged inside and/or outside the rotor blade (1) on different, vibration-relevant locations.

36. Device for monitoring the state of rotor blades according to one of Claims 21 to 35, **characterized in that** at least one one-dimensional or multidimensional vibration excitor (actuator) is arranged on the aerodynamic shell (6) or on an internal component of the rotor blade (1).

37. Device for monitoring the state of rotor blades according to Claim 36, **characterized in that** the actuator is a shaker with power amplifier.

## Revendications

1. Procédé de surveillance de l'état des pales de rotor sur des centrales éoliennes au moyen de la mesure du bruit de structure d'au moins une pale de rotor avec au moins un capteur fixé sur la pale de rotor, lequel est relié avec une unité de transmission sans fil des signaux de sortie des capteurs à une unité d'interprétation, laquelle comprend une unité de calcul centrale et des unités de mémoire, les signaux de sortie du capteur étant transmis sans fil à l'unité d'interprétation où un spectre de fréquences est déterminé à partir des signaux au moyen de méthodes appropriées, le spectre de fréquences est comparé avec des spectres de référence stockés dans l'unité d'interprétation correspondant à des états de dommage et particuliers définis et paramétrés et l'état de la pale de rotor est déterminé à partir de cela, **caractérisé en ce qu'**une mesure de bruit de structure est réalisée à partir d'une séquence d'une pluralité de mesures individuelles effectuées directement les unes après les autres (période de mesure), dont chacune est enregistrée avec le capteur qui tourne avec la pale de rotor et dont le début est déclenché à un angle de rotation (14) uniforme de la pale de rotor (1) en référence à l'axe de rotation du rotor, tous les spectres de fréquences déterminés de chaque mesure individuelle sont cumulés et le spectre de fréquences déterminé par le cumul est comparé avec les spectres de référence.

2. Procédé de surveillance de l'état des pales de rotor selon la revendication 1, **caractérisé en ce que** la mesure de bruit de structure d'une pale de rotor (1) est effectuée en plusieurs dimensions avec plusieurs capteurs (5) qui sont de préférence orientés différemment et synchronisés.

3. Procédé de surveillance de l'état des pales de rotor selon la revendication 2, **caractérisé en ce que** la caractérisation de l'oscillation est réalisée dans un système de coordonnées approprié, de préférence un système de coordonnées sphériques.

4. Procédé de surveillance de l'état des pales de rotor selon l'une des revendications 1 à 3, **caractérisé en ce que** le déclenchement de chaque mesure individuelle d'une période de mesure sur un angle de rotation (14) uniforme est initié au moyen d'un capteur supplémentaire (5) qui transfère les informations de l'angle de rotation actuelles à une unité d'alimentation du capteur et de préconditionnement des valeurs mesurées (11) qui régule la mesure.

5. Procédé de surveillance de l'état des pales de rotor selon l'une des revendications 1 à 3, **caractérisé en ce que** le déclenchement de chaque mesure individuelle d'une période de mesure sur un angle de rotation (14) uniforme est effectué par logiciel dans l'unité d'interprétation (12) **en ce que** chaque mesure individuelle est sélectionnée par des critères de départ en rapport avec la périodicité issus des plages de mesure plus grandes d'une ou plusieurs mesures.

6. Procédé de surveillance de l'état des pales de rotor selon l'une des revendications 1 à 5, **caractérisé en ce que** le paramétrage des spectres de référence est effectué par des données météorologiques et/ou spécifiques à l'installation.

7. Procédé de surveillance de l'état des pales de rotor selon la revendication 6, **caractérisé en ce que** les paramètres des spectres de référence sont déterminés actuellement en parallèle avec la mesure du bruit de structure par des mesures supplémentaires et sont transmis à l'unité d'interprétation (12).

8. Procédé de surveillance de l'état des pales de rotor selon l'une des revendications 1 à 7, **caractérisé en ce que** les spectres de fréquences des mesures individuelles de la pale de rotor (1) sont corrigés des parasites qui sont transmis par l'installation sur la pale de rotor (1) **en ce que** la mesure du bruit de structure est réalisé au moyen d'un ou plusieurs capteurs uni- ou pluridimensionnels (5), de préférence dans l'environnement de la source de parasite, et les spectres de fréquences des parasites sont déterminés à partir de celle-ci.

9. Procédé de surveillance de l'état des pales de rotor selon l'une des revendications 1 à 7, **caractérisé en ce que** les mesures de préférence synchronisées de toutes les pales de rotor (1) d'une centrale éolienne sont effectuées et le changement d'état d'une pale de rotor (1) est déterminé à partir de la différence entre les spectres de fréquences cumulés de toutes les pales de rotor (1) et de la comparaison du spectre différentiel avec les spectres de référence.

10. Procédé de surveillance de l'état des pales de rotor selon l'une des revendications 1 à 9, **caractérisé en ce que** les spectres de référence sont subdivisés en au moins deux groupes d'état et l'état d'une pale de rotor (1) est associé à l'un des groupes d'état au moyen de la comparaison des spectres.

11. Procédé de surveillance de l'état des pales de rotor selon l'une des revendications 1 à 10, **caractérisé en ce que** les harmoniques dans le spectre de fréquences cumulé sont déterminées.

12. Procédé de surveillance de l'état des pales de rotor selon la revendication 11, **caractérisé en ce que** les harmoniques de la fréquence de rotation des pales de rotor dans le spectre cumulé sont déterminées.

13. Procédé de surveillance de l'état des pales de rotor selon l'une des revendications 1 à 12, **caractérisé en ce qu'**en présence d'états définis d'une pale de rotor (1), un message d'état est généré dans l'unité d'interprétation (12), celui-ci est transmis au système de commande d'installation (28) de la centrale éolienne et une influence est exercée sur le fonctionnement de la centrale éolienne.

14. Procédé de surveillance de l'état des pales de rotor selon l'une des revendications 1 à 13, **caractérisé en ce qu'**une pale de rotor (1) est excitée activement au moyen d'un excitateur d'oscillation.

15. Procédé de surveillance de l'état des pales de rotor selon la revendication 14, **caractérisé en ce que** l'excitation est effectuée **en ce que** l'excitateur d'oscillation parcourt continuellement une plage de fréquences pertinente (mode balayage).

16. Procédé de surveillance de l'état des pales de rotor selon l'une des revendications 1 à 15, **caractérisé en ce que** la comparaison des spectres de fréquences mesurés avec les spectres de référence est effectuée au moyen de procédés d'identification de modèle appropriés.

17. Procédé de surveillance de l'état des pales de rotor selon l'une des revendications 1 à 15, **caractérisé en ce que** l'association des spectres de fréquences mesurés avec les spectres de référence est effectuée au moyen de méthodes statistiques appropriées.

18. Procédé de surveillance de l'état des pales de rotor selon l'une des revendications 1 à 15, **caractérisé en ce que** les spectres de fréquences mesurés sont soumis à une analyse de spectre et les valeurs des fréquences propres déterminées ainsi que leurs amplitudes sont représentées dans des vecteurs ou des matrices.

19. Procédé de surveillance de l'état des pales de rotor selon l'une des revendications 1 à 18, **caractérisé en ce que** les spectres de référence sont déterminés à partir des spectres de fréquences évalués statistiquement et soumis à une observation d'équivalence des mesures précédentes du bruit de structure de la pale de rotor (1) concernée.

20. Procédé de surveillance de l'état des pales de rotor selon l'une des revendications 1 à 19, **caractérisé en ce que** la transmission sans fil des signaux de mesure pré- et post-conditionnés du capteur (5) est effectuée par transmission radioélectrique.

21. Dispositif de surveillance de l'état des pales de rotor sur des centrales éoliennes pour mettre en oeuvre le procédé selon l'une des revendications 1 à 20, **caractérisé en ce que** le ou les capteurs (5) de mesure du bruit de structure sont fixés à l'intérieur et/ou à l'extérieur de la pale de rotor (1) à demeure sur une surface de la coque aérodynamique (6) et/ou sur des composants internes de la pale de rotor (1) et **en ce qu'**un capteur (5) supplémentaire est disposé sur le rotor en tant que capteur de déclenchement, lequel est conçu pour les mesures de l'angle de rotation.

22. Dispositif de surveillance de l'état des pales de rotor selon la revendication 21, **caractérisé en ce que** les capteurs (5) sont des capteurs d'accélération.

23. Dispositif de surveillance de l'état des pales de rotor selon la revendication 21 ou 22, **caractérisé en ce qu'**au moins un capteur unidimensionnel (5) est prévu.

24. Dispositif de surveillance de l'état des pales de rotor selon la revendication 21 ou 22, **caractérisé en ce qu'**au moins un capteur multidimensionnel (5) est prévu.

25. Dispositif de surveillance de l'état des pales de rotor selon l'une des revendications 21 à 24, **caractérisé en ce qu'**une orientation du mouvement d'un capteur (5) est alignée pour l'essentiel perpendiculairement à la surface sur laquelle est fixé le capteur (5).

26. Dispositif de surveillance de l'état des pales de rotor selon l'une des revendications 21 à 25, **caractérisé en ce qu'**un capteur (5) est fixé dans le tiers inférieur de la pale de rotor (1), faisant face au pied de la pale de rotor (16), sur une surface de la coque aérodynamique (6) de la pale rotor (1).

27. Dispositif de surveillance de l'état des pales de rotor selon l'une des revendications 21 à 26, **caractérisé en ce qu'**un capteur (5) est fixé sur les composants porteurs (9) à l'intérieur de la pale de rotor (1).

28. Dispositif de surveillance de l'état des pales de rotor selon l'une des revendications 21 à 27, **caractérisé en ce qu'**une sonde de température est fixée sur la pale de rotor (1) pour mesurer la température de la pale de rotor.

29. Dispositif de surveillance de l'état des pales de rotor selon l'une des revendications 21 à 28, **caractérisé en ce qu'**un capteur de course est fixé sur la pale de rotor (1) pour mesurer l'angle de pas.

30. Dispositif de surveillance de l'état des pales de rotor selon l'une des revendications 21 à 29, **caractérisé en ce que** dans l'unité d'interprétation (12) est stockée une base de données faisant office de bibliothèque de spectres (19) contenant des spectres de référence des pales de rotor (1) avec des états exempts de dommage ainsi que des états de dommage et particuliers définis, laquelle permet de préférence un accès sélectif rapide.

31. Dispositif de surveillance de l'état des pales de rotor selon l'une des revendications 21 à 30, **caractérisé en ce que** l'unité d'interprétation (12) est reliée avec un serveur de sauvegarde (26) décentralisé installé à distance.

32. Dispositif de surveillance de l'état des pales de rotor selon l'une des revendications 21 à 31, **caractérisé en ce que** l'unité d'interprétation (12) comprend une unité de diffusion (27), de préférence avec un module de sortie binaire qui est de préférence sécurisé intrinsèquement et de l'extérieur et délivre de préférence des signaux redondants.

33. Dispositif de surveillance de l'état des pales de rotor selon l'une des revendications 21 à 32, **caractérisé en ce que** les signaux de sortie de plusieurs centrales éoliennes sont transmis à une unité d'interprétation (12) commune et sont interprétés dans celle-ci.

34. Dispositif de surveillance de l'état des pales de rotor selon l'une des revendications 21 à 33, **caractérisé en ce que** des capteurs supplémentaires sont montés sur la centrale éolienne pour mesurer des valeurs mesurées météorologiques et/ou spécifiques à l'installation et/ou des états d'oscillation spécifiques à l'installation.

35. Dispositif de surveillance de l'état des pales de rotor selon l'une des revendications 21 à 34, **caractérisé en ce que** des supports (7) destinés à accueillir des capteurs (5) sont disposés à l'intérieur et/ou à l'extérieur de la pale de rotor (1) en différents endroits pertinents pour les oscillations.

36. Dispositif de surveillance de l'état des pales de rotor selon l'une des revendications 21 à 35, **caractérisé en ce qu'**au moins un excitateur d'oscillation (actionneur) uni- ou pluridimensionnel est disposé sur la coque aérodynamique (6) ou sur un composant interne de la pale de rotor (1).

37. Dispositif de surveillance de l'état des pales de rotor selon la revendication 36, **caractérisé en ce que** l'actionneur est un vibreur avec amplificateur de puissance.
